# EUROPEAN PATENT SPECIFICATION

(11) **EP 2 130 756 B1**
(45) Date of publication and mention of the grant of the patent: **03.10.2012**
(21) Application number: 09009915.1
(22) Date of filing: 01.08.2003
(51) Int. Cl.: B62M 3/00, B62K 19/16

(54) **Bicycle component and method for manufacturing such a component**
Fahrradkomponente und Verfahren zur Herstellung einer solchen Komponente
Composant de bicyclette et procédé de fabrication d'un tel composant

(30) Priority: 11.06.2003 EP 03425378
(43) Date of publication of application: 09.12.2009
(62) Divisional of application: 03425530.7
(73) Proprietor: CAMPAGNOLO S.r.l., 36100 Vicenza (VI) (IT)
(72) Inventor: Dal Pra', Giuseppe, 36010 Zanè-(VI) (IT); Dettori, Paolo, 36057 Arcugnago (Vicenza) (IT); Feltrin, Mauri, 36024 Nanto-(VI) (IT)
(74) Representative: Castiglia, Paolo

(56) References cited:
- EP-A- 1 281 609
- FR-A- 2 722 753
- US-A- 3 080 893
- US-A- 4 339 490
- US-A- 4 657 795
- US-A- 5 271 784
- US-A- 5 435 869
- US-A- 5 624 519
- US-A- 5 667 857
- US-A1- 2003 087 572

## Description

The present invention relates to a bicycle component and a method for manufacturing such a component, this method being particularly suitable for being used in the assemblage of bicycle parts where high specific pressures are to be dealt with.

Throughout this patent description the component being referred to is a pedal crank, but what said can be extended to bicycle components which are different but which have characteristics similar to those of a pedal crank, like, for example, the seat tube.

According to the prior art, different types of pedal crank can be identified, with different shapes, materials and constructive techniques in order to achieve the object of reducing the weight as much as possible and, at the same time, ensuring, if not even improving, the characteristics of strength and reliability of the pedal crank.

The trend towards manufacturing lighter pedal cranks has led to the use of composite materials, in particular formed of sheets of plastic material made of resin, incorporating structural fibres. The structural fibres, indeed, considerably contribute to the structural strength of the pedal crank.

A known solution which uses the aforementioned technique is shown in EP 1 281 609 to the same Applicant, which discloses the preamble of claim 1, wherein the body of the pedal crank is obtained by moulding of a thermosetting composite material inside a mould in which metal inserts are arranged.

The composite material used in such a case is preferably of the type described in US 4 339 490 and consists of sheets formed of a resin matrix in which oblong or other shaped small sheets of structural fibres are incorporated, of a size between 1 and 100 mm and orientated randomly into the sheet. The use of such a type of composite material for moulding provides for a good compromise between obtaining good strength characteristics typical of the structural fibres, and the need to keep a sufficient fluidity during moulding. The size of the small sheets, indeed, allows the composite material to flow sufficiently uniformly inside the mould, creating a pedal crank body with characteristics of good homogeneity.

However, the use of composite material in small sheets of structural fibres gives rise to some drawbacks.

A first drawback occurs during the moulding of the pedal crank, specifically in the end zones, where the metal inserts for the connection of the pedal crank to the bottom bracket and to the pedal are arranged.

The moulding technique used, indeed, provides for arranging a predetermined amount of composite material in the central zone of the mould and, during the moulding step, making such a composite material flow until all of the mould is filled, even the end zones where the metal inserts are arranged. During the moulding step, the composite material goes around the metal inserts following two distinct flows which join together close to the end of the pedal crank, completely encasing the inserts.

Disadvantageously, this causes a zone of discontinuity in the joint points of the two flows. Moreover, due to the greater fluidity of the resin with respect to that of the structural fibres and due to the long route (from the centre to the end of the mould), the end zones of the pedal crank have a greater percentage of resin with respect to the percentage in the rest of the pedal crank and, therefore, also lower strength with respect to the rest of the pedal crank.

Since the end zones of the pedal crank are subjected to substantial stress during pedalling, the two aforementioned drawbacks can lead to undesired breaking of the pedal crank in such zones.

Another drawback encountered in pedal cranks obtained by moulding of composite material of small sheets of structural fibres is the breaking of the pedal crank in its central zone. The occurrence of such a drawback is due to the fact that such a composite material with small sheets does not ensure sufficient strength in such a zone of the pedal crank.

US 5667875 discloses a molding sheet material for a safety shoe having a sandwich structure produced by overlapping a fiber reinforced thermoplastic resin layer reinforced with a woven fabric or a knitted web of a reinforcing fiber and a fiber reinforced thermoplastic resin layer reinforced with a random mat of a reinforcing fiber.

In a first aspect thereof, the invention relates to as recited in claim 1.

Advantageously, the combination between a layer of continuous structural fibres and a layer of structural fibres in small sheets, randomly arranged in the layer, allows the component to have excellent structural strength, whilst still leaving good fluidity to the resulting composite material.

Preferably, the semi-finished product consists of two overlapping layers formed of continuous unidirectional structural fibres arranged according to directions perpendicular to each other, in turn overlapping a layer formed of small sheets of structural fibres, such layers being wound over each other so that the outer part consists of one of the layers of unidirectional fibre.

Advantageously, the continuous layer of structural fibres gives high mechanical strength to the end zone of the pedal crank. In fact, it avoids the formation in such an end zone of discontinuities of structural fibres and a reduction in the percentage thereof with respect to resin.

In another aspect thereof, the invention relates to a method for manufacturing a bicycle component as recited in claim 11.

Preferably, the method of the invention comprises a further step of rolling said layers before insertion of the composite material inside the mould. Furthermore, said rolling step is preferably realised so that said first layer is on the outside. A preventive polymerisation of said fibres before insertion of the composite material inside the mould is preferably effected.

Further characteristics and advantages of the invention shall become clearer from the description of some preferred embodiments, given with reference to the attached drawings, where:
- fig. 1 represents a schematic axonometric view of the component of the invention;
- fig. 2 represents a section view from above of the component of fig. 1;
- fig. 3 represents a variant embodiment of the component of fig. 1;
- fig. 4 represents a section view from above of the component of fig. 3;
- fig. 5 represents another variant embodiment of the component of fig. 1;
- figures 6 to 11 represent different axonometric views of the semi-finished product of the invention;
- fig. 12 represents an exploded axonometric view of the mould used for manufacturing the component of the invention;
- fig. 13 represents an axonometric view of a detail of fig. 12;
- fig. 14 represents an exploded axonometric view of the mould used for manufacturing a variant of the component of the invention;
- fig. 15 represents an axonometric view of a variant embodiment relative to the progression of the continuous layers of structural fibres in a branched pedal crank;
- fig. 16 represents a plan view of fig. 15;
- fig. 17 represents another variant relative to the progression of the continuous layers of structural fibres in a branched pedal crank;
- fig. 18 represents an axonometric view of a further variant embodiment relative to the progression of the continuous layers of structural fibres in a branched pedal crank.

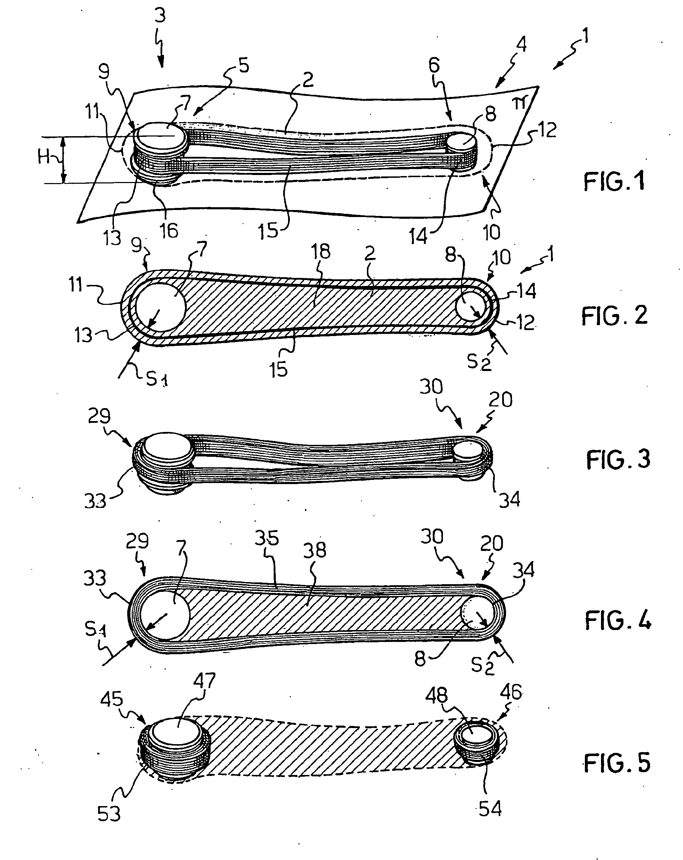

The component of the invention, shown and described, is a pedal crank wholly indicated in figs. 1 and 2 with 1. It essentially consists of an elongated body 2 formed of a composite material 18, comprising small sheets of structural fibres incorporated in a matrix of polymeric material, the small sheets being arranged randomly, as it can be seen more clearly in fig. 2. The pedal crank 1 has, at its end parts 3 and 4, respective seats 5 and 6 for mechanical coupling with the bottom bracket and with the pedal of the bicycle. The seats 5 and 6 incorporate cylindrical metal inserts 7 and 8 in which holes, not shown, are formed for connection to the bottom bracket and to the pedal, respectively.

In a variant embodiment of the invention, the seats 5 and 6 can consist of a hole of a suitable shape adapted to allow the direct connection of the pedal crank to the bottom bracket and to the pedal or else the subsequent insertion of metal inserts.

In the two end zones 9 and 10 of the pedal crank 1, between the seats 5 and 6 and the ends 11 and 12 of the body 2 of the pedal crank 1, there are continuous layers of structural fibres 13 and 14 which surround the end zones 9 and 10 of the seats 5 and 6. Such layers of continuous structural fibres 13 and 14 ensure that in such end zones 9 and 10 there is structural and mechanical continuity.

As it can be observed in fig. 1, the continuous layers of structural fibres 13 and 14 are made with unidirectional fires which are orientated substantially parallel to the middle plane π of the pedal crank 1. By middle plane n of the pedal crank 1 we mean a substantially flat surface which intersects the pedal crank 1 longitudinally and divides it substantially in half along its height H. Given the typical shape of the pedal crank 1, such a surface is slightly curved when one moves from one end 11 to the other 12 of the pedal crank 1.

As it can be clearly seen in fig. 2, the continuous layers of structural fibres 13 and 14, which surround the end zones 9 and 10 of the seats 5 and 6, are realised in a single closed loop 15 of unidirectional fibres which extends longitudinally along the body 2 of the pedal crank 1. In other cases, such a configuration could be different, like for example a series of unidirectional structural fibres surrounding the two seats 5 and 6 according to a typical "8-shaped" configuration.

In fig. 2, the continuous layers of structural fibres 13 and 14 are provided only in a part of the thicknesses S1 and S2 of the end zones 9 and 10 and can, at most, also be reduced to a single layer. Moreover, such layers 13 and 14 are provided only for a part of the height H of the pedal crank 1 and are confined in height by means of an annular retainer element 16, coaxial to the insert 7.

The arrangement of a limited number of layers 13 and 14 of fibres in the pedal crank 1 implies that they are substantially covered with the composite material 18 with which the body 2 of the pedal crank 1 is made, as it can be seen more clearly in fig. 2.

A different solution is shown in figures 3 and 4, wherein the continuous layers of structural fibres 33 and 34 substantially fill both of the thicknesses S1 and S2 of the end zones 29 and 30 of the pedal crank 20. In this solution the composite material 38 with which the body 2 of the pedal crank 1 is made is confined inside the loop 35 defined by the continuous layers of fibres 33 and 34.

In fig. 5 a variant is shown of the arrangement of the continuous layers of structural fibres 53 and 54 which, in this case, completely and separately surround the two seats 45 and 46 and the corresponding metal inserts 47 and 48.

In different embodiments, not shown in the figures, the continuous layers of structural fibres can take different shapes and sizes. For example, such layers can extend, at the end zone, for all of the height H of the pedal crank 1.

Moreover, such layers can be made of interwoven structural fibres according to at least two incident directions to make a fabric. In a preferred embodiment, such a fabric comprises a majority of fibres orientated according to a direction parallel to the middle plane of the pedal crank 1. Finally, it is possible that in further embodiments there are a plurality of continuous layers of structural fibres, according to any combination of the continuous layers described above.

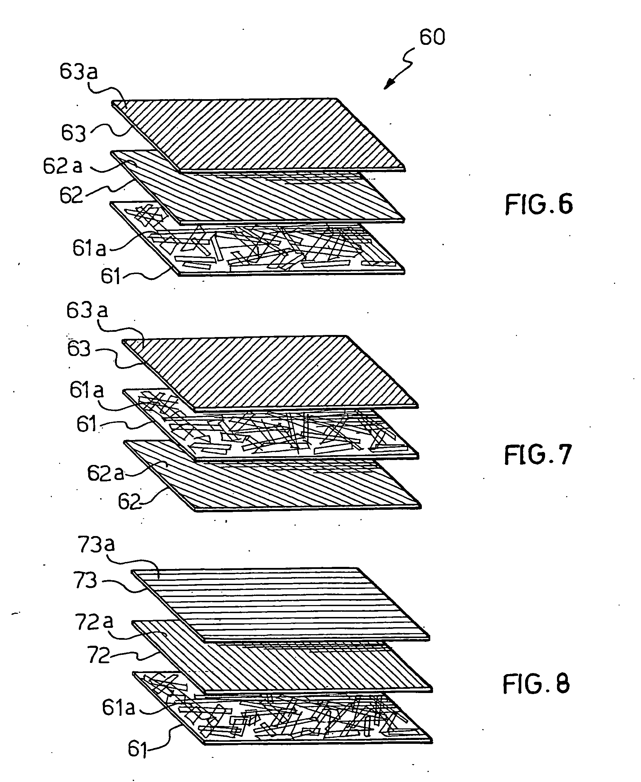

The pedal crank 1, and specifically its elongated body 2, according to the invention, is formed with a semi-finished product, indicated with 60 in fig. 6, consisting of three layers. One layer 61, formed of small sheets of structural fibre 61a incorporated in a matrix of polymeric material and arranged randomly inside the layer 61 and two layers 62 and 63 formed of continuous structural fibres 62a and 63a incorporated in a matrix of polymeric material and orientated according to directions which are complementary to each other, in particular -45° and +45°, The layers 61, 62 and 63 overlap one another and give the semi-finished product 60 characteristics of structural strength through the unidirectional fibres 62a and 63a and good characteristics of fluidity through the sheeted structure 61a, this last characteristic being exploited in the moulding step of the pedal crank 1.

The arrangement and number of the layers, as well as the directions of the structural fibres, can be chosen according to the particular properties of structural strength of the component wished to be obtained.

Thus, for example, in fig. 7 the layer 61 is arranged between the two layers 62 and 63.

The embodiment of fig. 8 differs from that of fig. 6 in that the unidirectional fibres 72a and 73a incorporated in the matrix of polymeric material of the respective layers 72 and 73 define complementary directions respectively orientated at +90° and 0°.

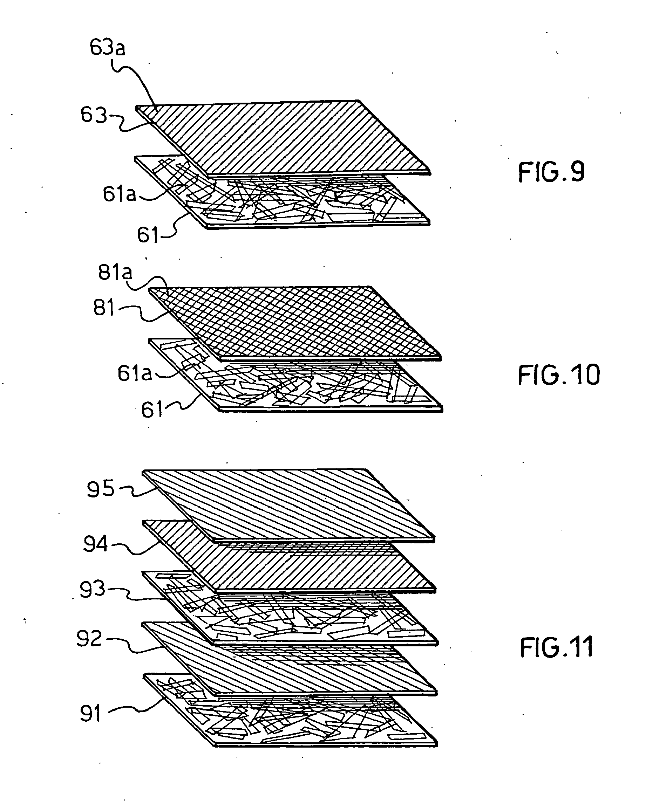

In fig. 9 the semi-finished product has a layer of small sheets of structural fibres 61a incorporated in a matrix of polymeric material overlapping a single layer 63 formed of continuous structural fibres 63a orientated according to the +45° direction.

In fig. 10 the semi-finished product has a layer of small sheets structural fibres 61a and a layer 81 in which the continuous structural fibres 81a are arranged according to two incident directions forming a fabric configuration.

Finally, in fig. 11 a semi-finished product formed of five layers is shown. Two layers 91 and 93 formed of small sheets of structural fibres incorporated in a matrix of polymeric material intercalated in three layers 92, 94 and 95 formed of continuous structural fibres orientated according to directions chosen between ±45°.

The semi-finished product 60 used for manufacturing the body 2 of the pedal crank 1, according to any of the illustrated embodiments and all other possible configurations, can also be rolled around a rolling axis before its use in the moulding step, as it shall be seen hereafter. This allows the characteristics of unidirectional strength of the structural fibres to be distributed in space.

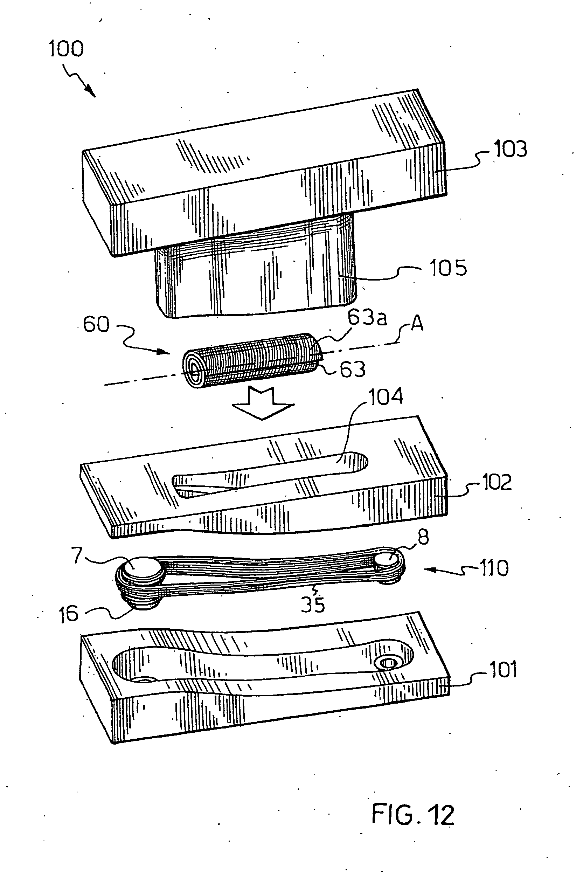

With reference to fig. 12, hereafter the method for manufacturing the pedal crank 20 shown in fig. 3 is described. However, it should be understood that the same method can be used for the other embodiments shown or described, for example those of figure 1 and 5.

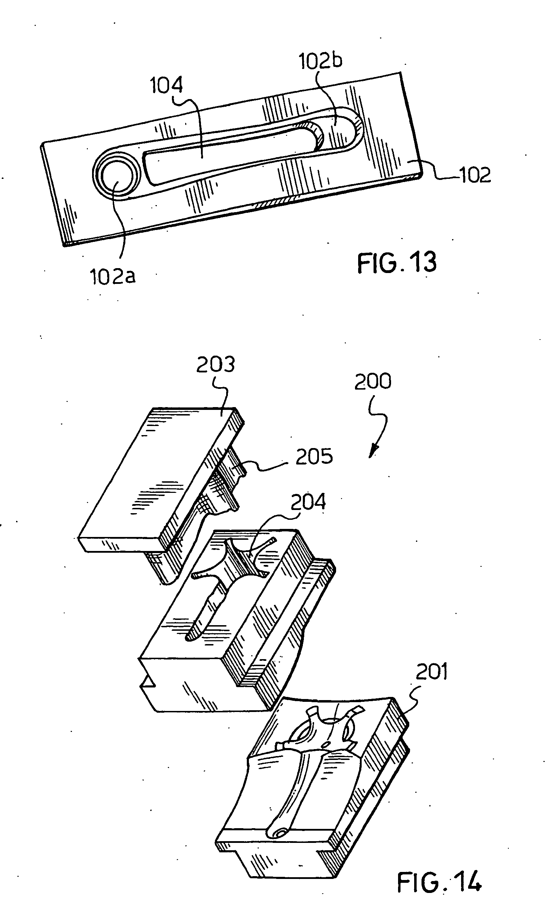

The method provides for the use of a mould 100 formed by three parts, consisting of two half-shells 101 and 102 and a plunger 103. The upper half-shell 102, as it can be seen more clearly in the bottom view thereof of fig. 13, has a through-opening 104 which allows the passage and the sliding of a presser element 105 of the plunger 103.

A first step of the method provides for the formation of the intermediate product 110 consisting of the inserts 7 and 8 on which the continuous layers of unidirectional structural fibres are wound in a closed loop configuration 35. Such an intermediate product 110 can be realised, for example, by winding a long fibre around the inserts 7, 8 with a number of layers sufficient to obtain the desired thickness and height. In particular, the arrangement of the fibres around the insert 7 is defined through the retainer element 16 which confines them in an upper portion of the insert 7. Experience has demonstrated, indeed, that it is precisely such a zone that is subjected to the greatest torsional stress during pedalling, thus requiring a greater structural strength.

The intermediate product 110 thus obtained is placed inside the lower half-shell 101 above which the upper half-shell 102 is closed so that its shapings 102a and 102b are in contact with the heads of the metal inserts 7 and 8.

When the mould 100 is closed, the semi-finished product 60 previously wound around the rolling axis A is inserted in the through opening 104. The winding of the semi-finished product 60 is realised so that its outer surface consists of the layer 63 formed of unidirectional fibres 63a. The semi-finished product 60 is pre-heated to ease the subsequent moulding.

After its insertion in the mould 100, the wound semi-finished product 60 is then in the zone defined between the inserts 7 and 8 and the inner part of the loop 35. The plunger 103 is lowered and the presser 105 slides inside the opening 104 of the upper half-shell 102 determining a thrusting action of the semi-finished product 60 inside the mould 100. During such a moulding step, the semi-finished product 60 uniformly fills the recess defined by the two half-shells 101 and 102, thanks to its fluidity. The closed loop configuration 35 of the unidirectional fibres allows them to keep their continuous configuration even during moulding, since the pressure forces applied by the composite material which constitutes the semi-finished product 60 are uniformly distributed along the loop 35. When the action of the presser 105 has ended, the mould 100 is heated, according to known techniques, and the material inside of it polymerises thus realising the desired pedal crank structure. Finally, the mould 100 is opened and the pedal crank is removed.

It is clear that for the described method any of the semi-finished products described above can be used, possibly even in non-wound configuration. If one wishes to manufacture the pedal crank according to the shape shown in fig. 5, it is then advisable for the intermediate product, in this case consisting of the inserts on which the unidirectional fibres are individually wound, to undergo a prepolymerisation treatment, so that the subsequent moulding does not modify the shape of the wound fibres.

In fig. 14 a variant of the mould shown in fig. 12 is shown which is used for manufacturing a branched pedal crank, commonly known as right pedal crank. Such a method differs from the previous one in that the semi-finished product, when inserted in the mould 200, covers the top of the metal insert intended for coupling with the bottom bracket. In this case, the access to such a metal insert can take place by the subsequent removal of material through machining. Or else, instead of the metal insert a support can be used for the winding of the unidirectional fibres which remains incorporated in the pedal crank and then a seat can be formed, through machining, for direct coupling with the bottom bracket or the insertion of a metal insert. It is also clear that the mould 200 can be modified so as to obtain a right pedal crank in which also the insert intended for coupling with the bottom bracket is immediately accessible.

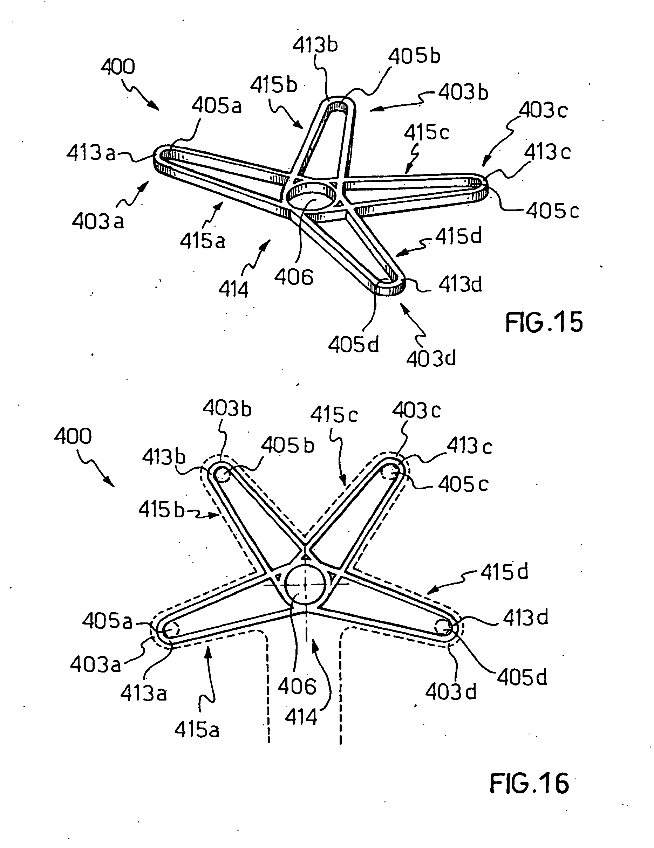

Figs. 15 and 16 show the progression of the continuous layers of structural fibres 413a, 413b, 413c, 413d for manufacturing a branched pedal crank, commonly referred to as a right pedal crank.

In such a case it is desired to ensure high structural and mechanical continuity of the end parts 403a, 403b, 403c, 403d of the spokes, in number of four in the case represented, where respective seats 405a, 405b, 405c, 405d which allow the connection to the front toothed crowns of the bicycle are formed. The seats 405a, 405b, 405c, 405d can incorporate respective metal inserts in which suitable holes for the connection to the toothed crowns are formed, or else they can consist of a hole of a suitable shape such as to allow the direct connection of the toothed crowns to the spokes of the pedal crank. For the sake of simplicity of explanation, no insert is shown in the figures.

As shown in the embodiment of the figures, the continuous layers of structural fibres 413a, 413b, 413c, 413d partially surround the seats 405a, 405b, 405c, 405d of the end parts 403a, 403b, 403c, 403d of the spokes for an arc of circumference of about 180°. Such layers are each arranged in such a way as to form respective loops 415a, 415b, 415c, 415d which close on the central zone 414 where the pedal crank has a suitable seat 406 for the connection to the bottom bracket.

The structural fibres thus arranged define an intermediate product 400 which is star-shaped. As shown in fig. 15, such an intermediate product 400 is advantageously made through continuous winding, along suitable paths, of continuous layers of unidirectional fibre. The intermediate product 400 can be made directly inside the mould, for example inside the mould shown in fig. 14, or else it can be made separately using a mask which mirrors the shape of the spokes. The manufacturing of the intermediate product 400 separately allows a prior preheating of the fibres to be realised and allows them to be given a pre-shaping before the positioning *in loco* into the mould.

The intermediate product 400 is arranged inside the mould 200 on a plane overlapping the one in which the closed loop of structural fibres 15 (represented in fig. 2) is arranged, said fibres being arranged along the elongated body 2 of the pedal crank. The configuration thus obtained allows a right pedal crank to be manufactured having simultaneously the zones intended for coupling with the pedal and with the bottom bracket and the ends of the spokes with high structural and mechanical continuity.

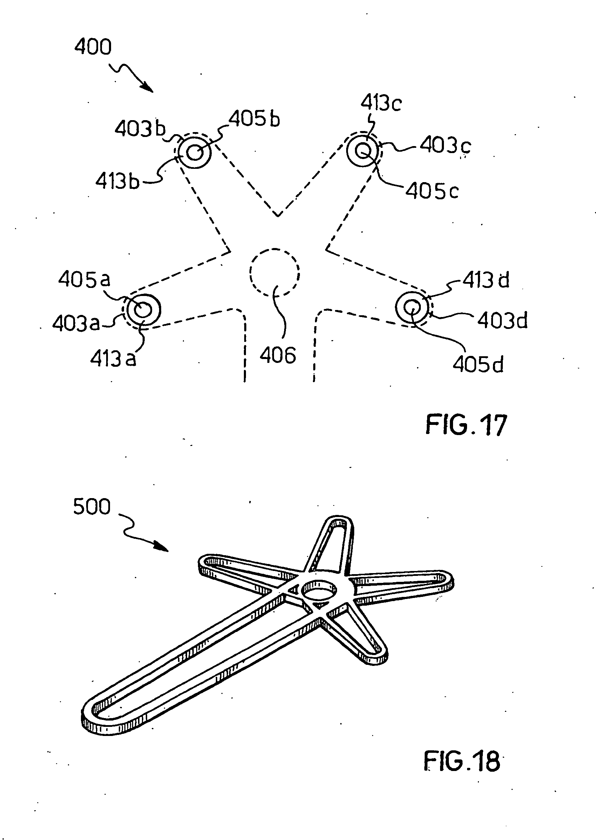

In a variant embodiment, shown in fig. 17, each seat 405a, 405b, 405c, 405d can be completely surrounded by structural fibres 413a, 413b, 413c, 413d by using a closed loop configuration of the type shown in fig. 5.

The same result can be obtained through the manufacturing of a pre-formed semi-finished product 500, as shown in figure 18, where the continuous layers of structural fibres associated with the spokes and with the main body are on the same plane and substantially constitute a single element according to a comet-shape. As for the previous case, the intermediate product 500 can be manufactured directly inside the mould or else can be manufactured separately using a mask which mirrors the shape of the pedal crank.

## Claims

1. Bicycle component (1; 20) comprising an elongated body (2) manufactured using a semi-finished product (60), the elongated body (2) consisting of structural fibres incorporated in a matrix of polymeric material (18, 38) and being adapted to mechanically couple with at least one element of the bicycle and to transmit force, wherein the semi-finished product (60) comprises at least one first layer (62, 63; 72, 73; 81; 92, 94, 95) formed of continuous structural fibres (62a, 63a; 72a, 73a; 81a) incorporated in a matrix of polymeric material and at least one second layer (61; 91, 93) overlapping said at least one first layer (62, 63; 72, 73; 81; 92, 94, 95), **characterised in that** said at least one second layer (61; 91, 93) is formed of small sheets of structural fibres (61a) incorporated in a matrix of polymeric material and arranged randomly inside the layer (61; 91, 93).

2. Bicycle component (1; 20) according to claim 1, **characterised in that** said continuous structural fibres (62a, 63a; 72a, 73a) of said first layer (62, 63; 72, 73; 92, 94, 95) are unidirectional fibres.

3. Bicycle component (1; 20) according to any of the previous claims, **characterised in that** said continuous structural fibres (81a) are arranged in said first layer (81) according to two or more incident directions to form a fabric configuration.

4. Bicycle component (1; 20) according to any of the previous claims, **characterised in that** the semi-finished product (60) comprises a third layer (63, 62; 73, 72) of continuous structural fibres (63a, 62a; 73a, 72a) formed of unidirectional fibres arranged according to a direction complementary to the direction of said unidirectional fibres (62a, 63a; 72a, 73a) of said first layer (62, 63; 72, 73).

5. Bicycle component (1; 20) according to claim 4, **characterised in that** said directions of said unidirectional fibres (62a, 63a) of said first and third layers (62, 63) are +45° and -45° respectively.

6. Bicycle component (1; 20) according to claim 4 or 5, **characterised in that** said first, second and third layers (62, 61, 63) are arranged one next to the other wherein said second layer (61) is not between the other two (62, 63).

7. Bicycle component (1; 20) according to any of the previous claims, **characterised in that** said first and second layers (61, 62, 63; 61, 72, 73; 61, 81; 91, 92, 93, 94, 95) are rolled around each other.

8. Bicycle component (1; 20) according to any of claims 4 to 7, **characterised in that** said first, second and third layers (61, 62, 63; 61, 72, 73; 61, 81; 91, 92, 93, 94, 95) of structural fibres are rolled along a rolling axis (A) so that in rolled configuration said first or second layer (62, 63; 72, 73; 81; 92, 94, 95) is on the outside.

9. Bicycle component (1; 20) according to any of the previous claims, **characterised in that** the semi-finished product (60) comprises any number of overlapping layers, according to claims 2 to 5.

10. Bicycle component (1; 20) according to claim 1, wherein said elongated body (2) has, in an end part thereof (3, 4; 403a, 403b, 403c, 403d), a seat (5, 6; 45, 46; 405a, 405b, 405c, 405d, 406) for mechanical coupling with an element of the bicycle, wherein in the zone (9, 10; 29, 30) between said seat (5, 6; 45, 46; 405a, 405b, 405c, 405d, 406) and the end of said body (11, 12) there is at least one continuous layer of structural fibres (13, 14; 33, 34; 53, 54; 413a, 413b, 413c, 413d) at least partially surrounding said seat (5, 6; 45, 46; 405a, 405b, 405c, 405d, 406) to ensure mechanical continuity in said zone (9, 10; 29, 30), the elongated body (2) comprising, in its central part, said at least one first layer (62, 63; 72, 73; 81; 92, 94, 95) and said at least one second layer (61; 91, 93) overlapping each other.

11. Method for manufacturing a bicycle component (1; 20) comprising an elongated body (2) consisting of structural fibres incorporated in a matrix of polymeric material (18, 38) and having, in an end part thereof (3, 4; 403a, 403b, 403c, 403d), a seat (5, 6; 45, 46; 405a, 405b, 405c, 405d, 406) for mechanical coupling with an element of the bicycle, **characterised in that** it comprises the following steps:
- arranging, at a first half (101; 201) of a mould (100; 200), a metal insert (7, 8, 47, 48) intended to define said seat (5, 6; 45, 46; 405a, 405b, 405c, 405d, 406);
- closing a second half (102; 202) of the mould (100; 200) above said first half (101; 202);
- inserting, from an opening (104; 204) in said second half (102; 202) of the mould, a semi-finished product (60) comprising a composite material (18; 38) formed by overlapping at least one first layer (62, 63; 72, 73; 81; 92, 94, 95) formed of continuous structural fibres (62a, 63a; 72a, 73a; 81a) incorporated in a matrix of polymeric material and at least one second layer (61; 91, 93) formed of small sheets of structural fibres (61a) incorporated in a matrix of polymeric material and arranged randomly inside the layer;
- inserting, in said opening (104; 204) at said half (102; 202) of the mould (100; 200), a plunger and subjecting said composite material to a pressure to allow the recess defined by the mould to be filled;
- increasing the temperature of the mould (100; 200) up to a value which allows the reticulation of the polymeric material of said matrix;
- moving the two parts (101, 102; 201, 202) of the mould (100; 200) apart and removing said component (1; 20).

12. Method according to claim 11, **characterised in that** it comprises a further step of rolling said layers before insertion of the composite material inside the mould.

13. Method according to claim 12, **characterised in that** said rolling step is realised so that said first layer is on the outside.

14. Method according to claim 13, **characterised in that** a preventive polymerisation of said fibres before insertion of the composite material inside the mould (100; 200) is effected.

## Patentansprüche

1. Fahrradbauteil (1; 20), umfassend einen länglichen Körper (2), der unter Verwendung eines Halbzeuges (60) gefertigt ist, wobei der längliche Körper (2) aus Strukturfasern besteht, die in einer Matrix eines Polymermaterials (18, 38) enthalten sind, und dazu eingerichtet ist, mit wenigstens einem Element des Fahrrades verbunden zu werden und eine Kraft zu übertragen, wobei das Halbzeug (60) wenigstens eine erste Schicht (62, 63; 72, 73; 81; 92, 94, 95), die aus kontinuierlichen Strukturfasern (62a, 63a; 72a, 73a; 81a), die in einer Matrix eines Polymermaterials enthalten sind, hergestellt ist, und wenigstens eine zweite Schicht (61; 91, 93) enthält, die die wenigstens eine erste Schicht (62, 63; 72, 73; 81; 92, 94, 95) überlappt, **dadurch gekennzeichnet, dass** die wenigstens eine zweite Schicht (61; 91, 93) aus kleinen Blättern von Strukturfasern (61 a) besteht, die in einer Matrix eines Polymermaterials enthalten und zufallsartig in der Schicht (61; 91, 93) enthalten sind.

2. Fahrradbauteil (1; 20) nach Anspruch 1, **dadurch gekennzeichnet, dass** die kontinuierlichen Strukturfasern (62a, 63a; 72a, 73a) der ersten Schicht (62, 63; 72, 73; 92, 94, 95) unidirektionale Fasern sind.

3. Fahrradbauteil (1; 20) nach einem der vorhergehenden Ansprüche, **dadurch gekennzeichnet, dass** die kontinuierlichen Strukturfasern (81a) in der ersten Schicht (81) gemäß wenigstens zwei Einfallsrichtungen angeordnet sind, um eine Gewebekonfiguration auszubilden.

4. Fahrradbauteil (1; 20) nach einem der vorhergehenden Ansprüche, **dadurch gekennzeichnet, dass** das Halbzeug (60) eine dritte Schicht (63, 62; 73, 72) kontinuierlicher Strukturfasern (63a, 62a; 73a, 72a) enthält, die aus unidirektionalen Fasern besteht, die gemäß einer Richtung angeordnet sind, die komplementär zu der Richtung der unidirektionalen Fasern (62a, 63a; 72a, 73a) der ersten Schicht (62, 63; 72, 73) ist.

5. Fahrradbauteil (1; 20) nach Anspruch 4, **dadurch gekennzeichnet, dass** die Richtungen der unidirektionalen Fasern (62a, 63a) der ersten und der dritten Schicht (62, 63) +45° bzw. -45° betragen.

6. Fahrradbauteil (1; 20) nach Anspruch 4 oder 5, **dadurch gekennzeichnet, dass** die erste, zweite und dritte Schicht (62, 61, 63) nebeneinander angeordnet sind, wobei sich die zweite Schicht (61) nicht zwischen den anderen beiden (62, 63) befindet.

7. Fahrradbauteil (1; 20) nach einem der vorhergehenden Ansprüche, **dadurch gekennzeichnet, dass** die erste und die zweite Schicht (61, 62, 63; 61, 72, 73; 61, 81; 91, 92, 93, 94, 95) umeinander gerollt sind.

8. Fahrradbauteil (1; 20) nach einem der Ansprüche 4 bis 7, **dadurch gekennzeichnet**, das die erste, zweite und dritte Schicht (61, 62, 63; 61, 72, 73; 61, 81; 91, 92, 93, 94, 95) der Strukturfasern entlang einer Rollachse (A) gerollt sind, so dass sich im gerollten Zustand die erste oder zweite Schicht (62, 63; 72, 73; 81; 92, 94, 95) auf der Außenseite befindet.

9. Fahrradbauteil (1; 20) nach einem der vorhergehenden Ansprüche, **dadurch gekennzeichnet, dass** das Halbzeug (60) eine beliebige Anzahl überlappender Schichten nach Anspruch 2 bis 5 enthält.

10. Fahrradbauteil (1; 20) nach Anspruch 1, bei dem der längliche Körper (2) an einem Endteil desselben (3, 4; 403a, 403b, 403c, 403d) einen Sitz (5, 6; 45, 46; 405a, 405b, 405c, 405d, 406) für die mechanische Kopplung mit einem Element des Fahrrades hat, wobei sich in dem Bereich (9, 10; 29, 30) zwischen dem Sitz (5, 6; 45, 46; 405a, 405b, 405c, 405d, 406) und dem Ende des Körpers (11, 12) wenigstens eine kontinuierliche Schicht von Strukturfasern (13, 14; 33, 34; 53, 54; 413a, 413b, 413c, 413d) befindet, die wenigstens teilweise den Sitz (5, 6; 45, 46; 405a, 405b, 405c, 405d, 406) umgibt, um eine mechanische Kontinuität in diesem Bereich (9, 10; 29, 30) sicherzustellen, wobei der längliche Körper (2) in seinem zentralen Teil die wenigstens eine erste Schicht (62, 63; 72, 73; 81; 92, 94, 95) und die wenigstens eine zweite Schicht (61; 91, 93) enthält, die einander überlappen.

11. Verfahren zum Herstellen eines Fahrradbauteiles (1; 20), das einen länglichen Körper (2) enthält, der aus Strukturfasern besteht, die in einer Matrix eines Polymermaterials (18, 38) enthalten sind, und der an einem Endteil desselben (3, 4; 403a, 403b, 403c, 403d) einen Sitz (5, 6; 45, 46; 405a, 405b, 405c, 405d, 406) für die mechanische Kopplung mit einem Element des Fahrrades hat, **dadurch gekennzeichnet, dass** das Verfahren die folgenden Schritte umfasst:
- Anordnen, in einer ersten Hälfte (101; 201) einer Form (100; 200) eines Metalleinsatzes (7, 8, 47, 48), der dazu bestimmt ist, den Sitz (5, 6; 45, 46; 405a, 405b, 405c, 405d, 406) zu definieren;
- Schließen einer zweiten Hälfte (102; 202) der Form (100; 200) über der ersten Hälfte (101; 202);
- Einfügen durch eine Öffnung (104; 204) in der zweiten Hälfte (102; 202) der Form eines Halbzeuges (60), das ein Verbundmaterial (18; 38) enthält, das durch Überlappen wenigstens einer ersten Schicht (62, 63; 72, 73; 81; 92, 94, 95), die aus kontinuierlichen Strukturfasern (62a, 63a; 72a, 73a; 81 a) ausgebildet ist, die in einer Matrix eines Polymermaterials enthalten sind, und wenigstens einer zweiten Schicht (61; 91, 93) ausgebildet ist, die aus kleinen Blättern von Strukturfasern (61 a) besteht, die in einer Matrix eines Polymermaterials enthalten und zufallsartig in der Schicht angeordnet sind;
- Einfügen in die Öffnung (104; 204) an der Hälfte (102; 202) der Form (100; 200) eines Kolbens und Ausüben eines Drucks auf das Verbundmaterial, um ein Befüllen der Aussparung zu ermöglichen, die von der Form begrenzt ist;
- Erhöhen der Temperatur der Form (100; 200) bis zu einem Wert, der die Vernetzung des Polymermaterials der Matrix gestattet; und
- Bewegen der beiden Teile (101, 102; 201, 202) der Form (100; 200) voneinander weg und Entehmen des Bauteils (1; 20).

12. Verfahren nach Anspruch 11, **dadurch gekennzeichnet, dass** es einen weiteren Schritt des Rollens der Schichten vor dem Einfügen des Verbundmaterials in die Form umfasst.

13. Verfahren nach Anspruch 12, **dadurch gekennzeichnet, dass** der Rollschritt derart ausgeführt wird, dass sich die erste Schicht auf der Außenseite befindet.

14. Verfahren nach Anspruch 13, **dadurch gekennzeichnet, dass** eine präventive Polymerisation der Fasern vor dem Einfügen des Verbundmaterials in die Form (100; 200) ausgeführt wird.

## Revendications

1. Composant de bicyclette (1 ; 20) comprenant un corps allongé (2) fabriqué en utilisant un produit semi-fini (60), le corps allongé (2) étant constitué de fibres structurelles incorporées dans une matrice de matériau polymère (18, 38) et étant conçu pour se coupler mécaniquement avec au moins un élément de la bicyclette et pour transmettre une force, où le produit semi-fini (60) comprend au moins une première couche (62, 63 ; 72, 73 ; 81 ; 92, 94, 95) formée de fibres structurelles continues (62a, 63a ; 72a, 73a ; 81a) incorporées dans une matrice de matériau polymère et au moins une deuxième couche (61 ; 91, 93) chevauchant ladite au moins une première couche (62, 63 ; 72, 73 ; 81 ; 92, 94, 95), **caractérisé en ce que** ladite au moins une deuxième couche (61 ; 91, 93) est formée de petites feuilles de fibres structurelles (61a) incorporées dans une matrice de matériau polymère et agencées de manière aléatoire à l'intérieur de la couche (61 ; 91, 93).

2. Composant de bicyclette (1 ; 20) selon la revendication 1, **caractérisé en ce que** lesdites fibres structurelles continues (62a, 63a ; 72a, 73a) de ladite première couche (62, 63 ; 72, 73 ; 92, 94, 95) sont des fibres unidirectionnelles.

3. Composant de bicyclette (1 ; 20) selon l'une quelconque des revendications précédentes, **caractérisé en ce que** lesdites fibres structurelles continues (80a) sont agencées dans ladite première couche (81) selon deux directions incidentes ou plus pour former une configuration tissée.

4. Composant de bicyclette (1 ; 20) selon l'une quelconque des revendications précédentes, **caractérisé en ce que** le produit semi-fini (60) comprend une troisième couche (63, 62 ; 73, 72) de fibres structurelles continues (63a, 62a ; 73a, 72a) formées de fibres unidirectionnelles agencées selon une direction complémentaire à la direction desdites fibres unidirectionnelles (62a, 63a ; 72a, 73a) de ladite première couche (62, 63 ; 72, 73).

5. Composant de bicyclette (1 ; 20) selon la revendication 4, **caractérisé en ce que** lesdites directions desdites fibres unidirectionnelles (62a, 63a) desdites première et troisième couches (62, 63) sont à +45 ° et à -45 ° respectivement.

6. Composant de bicyclette (1 ; 20) selon la revendication 4 ou 5, **caractérisé en ce que** lesdites première, deuxième et troisième couches (62, 61, 63) sont agencées les unes à côtés des autres, où ladite deuxième couche (61) ne se situe pas entre les deux autres (62, 63).

7. Composant de bicyclette (1 ; 20) selon l'une quelconque des revendications précédentes, **caractérisé en ce que** lesdites première et deuxième couches (61, 62, 63 ; 61, 72, 73 ; 61, 81 ; 91, 92, 93, 94, 95) sont enroulées l'une autour de l'autre.

8. Composant de bicyclette (1 ; 20) selon l'une quelconque des revendications 4 à 7, **caractérisé en ce que** lesdites première, deuxième et troisième couches (61, 62, 63 ; 61, 72, 73 ; 61, 81 ; 91, 92, 93, 94, 95) de fibres structurelles sont enroulées le long d'un axe d'enroulement (A) de sorte que dans une configuration enroulée, ladite première ou deuxième couche (62, 63 ; 72, 73 ; 80 ; 92, 94, 95) se trouve sur l'extérieur.

9. Composant de bicyclette (1 ; 20) selon l'une quelconque des revendications précédentes, **caractérisé en ce que** le produit semi-fini (60) comprend un nombre quelconque de couches se chevauchant, selon les revendications 2 à 5.

10. Composant de bicyclette (1 ; 20) selon la revendication 1, dans lequel ledit corps allongé (2) présente, dans une partie d'extrémité (3, 4 ; 403a, 403b, 403c, 403d) de celui-ci, un siège (5, 6 ; 45, 46 ; 405a, 405b, 405c, 405d, 406) en vue d'un accouplement mécanique avec un élément de la bicyclette, où dans la zone (9, 10 ; 29, 30) entre ledit siège (5, 6 ; 45, 46 ; 405a, 405b, 405c, 405d, 406) et l'extrémité dudit corps (11, 12), il existe au moins une couche continue de fibres structurelles (13, 14 ; 33, 34 ; 53, 54 ; 413a, 413b, 413c, 413d) entourant au moins partiellement ledit siège (5, 6 ; 45, 46 ; 405a, 405b, 405c, 405d, 406) pour assurer une continuité mécanique dans ladite zone (9, 10 ; 29, 30), le corps allongé (2) comprenant, dans sa partie centrale, ladite au moins une première couche (62, 63 ; 72, 73 ; 81 ; 92, 94, 95) et ladite au moins une deuxième couche (61 ; 91, 93) se chevauchant l'une l'autre.

11. Procédé de fabrication d'un composant de bicyclette (1 ; 20) comprenant un corps allongé (2) constitué de fibres structurelles incorporées dans une matrice de matériau polymère (18, 38) et présentant, dans une partie d'extrémité (3, 4 ; 403a, 403b, 403c, 403d) de celui-ci, un siège (5, 6 ; 45, 46 ; 405a, 405b, 405c, 405d, 406) en vue d'un accouplement mécanique avec un élément de la bicyclette, **caractérisé en ce qu'**il comprend les étapes suivantes :
- une disposition, au niveau d'une première moitié (101 ; 201) d'un moule (100 ; 200), d'un élément rapporté métallique (7, 8, 47, 48) prévu pour définir ledit siège (5, 6 ; 45, 46 ; 405a, 405b, 405c, 405d, 406) ;
- un dépôt pour fermeture d'une deuxième moitié (102 ; 202) du moule (100 ; 200) au-dessus de ladite première moitié (101 ; 202) ;
- une insertion, depuis une ouverture (104 ; 204) dans ladite deuxième moitié (102 ; 202) du moule, d'un produit semi-fini (60) comprenant un matériau composite (18 ; 38) formé par un chevauchement d'au moins une première couche (62, 63 ; 72, 73 ; 81 ; 92, 94, 95) formée de fibres structurelles continues (62a, 63a ; 72a,73a ; 81a) incorporées dans une matrice de matériau polymère et d'au moins une deuxième couche (61 ; 91,93) formée de petites feuilles de fibres structurelles (61a) incorporée dans une matrice de matériau polymère et agencées de manière aléatoire à l'intérieur de la couche ;
- une insertion, dans ladite ouverture (104 ; 204) au niveau de ladite moitié (102 ; 202) du moule (100 ; 200), d'un noyau plongeur et une soumission dudit matériau composite à une pression afin de permettre à l'évidement défini par le moule d'être rempli ;
- une augmentation de la température du moule (100 ; 200) jusqu'à une valeur qui permet la réticulation du matériau polymère de ladite matrice ;
- une séparation des deux parties (101, 102 ; 201, 202) du moule (100 ; 200) et un retrait dudit composant (1 ; 20).

12. Procédé selon la revendication 11, **caractérisé en ce qu'**il comprend une étape supplémentaire d'enroulement desdites couches avant une insertion du matériau composite à l'intérieur du moule.

13. Procédé selon la revendication 12, **caractérisé en ce que** ladite étape d'enroulement est réalisée de sorte que ladite première couche se trouve sur l'extérieur.

14. Procédé selon la revendication 13, **caractérisé en ce qu'**une polymérisation préventive desdites fibres avant une insertion du matériau composite à l'intérieur du moule (100 ; 200) est effectuée.
